# EUROPEAN PATENT APPLICATION

(11) **EP 3 060 025 A1**
(43) Date of publication of application: **24.08.2016**
(21) Application number: 13897526.3
(22) Date of filing: 13.11.2013
(51) Int. Cl.: H04W 74/08

(54) **METHOD FOR ACQUIRING UPLINK GRANT INFORMATION, UE AND BASE STATION**

(71) Applicant: Huawei Technologies Co., Ltd., Longgang District Shenzhen, Guangdong 518129 (CN)
(72) Inventor: WANG, Fan, Shenzhen Guangdong 518129 (CN); MA, Xueli, Shenzhen Guangdong 518129 (CN)
(74) Representative: Pfenning, Meinig & Partner mbB
(86) International application number: PCT/CN2013/087020
(87) International publication number: WO 2015/070390

(57) **Abstract**

A method for acquiring uplink grant information, UE, and a base station are provided, where the method includes: obtaining, by UE, configuration signaling that includes a code channel number of a downlink control channel, and monitoring, on at least one code channel of the downlink control channel according to the configuration signaling, a channel that bears uplink grant information. During implementation of HSUPA by applying embodiments of the present invention, code channel resources of a downlink control channel that are supported by the UE are more than code channel resources of an uplink control channel; therefore, when a channel that bears uplink grant information is sent by using a code channel resource of the downlink control channel, flexibility of scheduling the UE by a system can be increased, and overheads of downlink code channel resources can also be reduced.

## Description

### TECHNICAL FIELD

The present invention relates to the field of communications technologies, and in particular, to a method for acquiring uplink grant information, user equipment (User Equipment, UE), and a base station.

### BACKGROUND

To meet increasing requirements for rates of mobile subscribers and to improve spectral efficiency of systems, a high speed packet access (High Speed Packet Access, HSPA) technology is introduced in a universal mobile telecommunications system (Universal Mobile Telecommunications System, UMTS), and includes high speed downlink packet access (High Speed Downlink Packet Access, HSDPA) and high speed uplink packet access (High Speed Uplink, Packet Access, HSUPA), so as to provide a communications system with a high data rate, a low delay, and a high system capacity.

During implementation of the HSDPA, a network device configures four high speed shared control channels (High Speed Shared Control Channel, HS-SCCH) to bear downlink grant information, and UE monitors four HS-SCCHs at a transmission time interval (Transmission Time Interval, TTI) of each HS-SCCH, to obtain, from the four HS-SCCHs, one HS-SCCH that carries an identity of the UE. During implementation of the HSUPA, the network device may configure one enhanced dedicated channel (Enhanced Dedicated Channel, E-DCH)-absolute grant channel (E-DCH Absolute Grant Channel, E-AGCH) to bear uplink grant information. To meet a time division multiplexing (Time Division Multiplexing, TDM) scheduling requirement, the network device may configure multiple E-AGCHs to bear uplink grant information, and the UE monitors only one E-AGCH at a TTI of each E-AGCH. It can be learned that during implementation of HSUPA in the prior art, the UE monitors only one E-AGCH, and therefore, the network device can schedule, at a time, only one UE in UEs that share a same E-AGCH. Consequently, scheduling flexibility of a system is not high. Moreover, when the network device configures multiple E-AGCHs, system resource overheads are also increased.

### SUMMARY

Embodiments of the present invention provide a method for acquiring uplink grant information, UE, and a base station, so as to resolve problems that scheduling flexibility of an existing system is not high, and system resource overheads are relatively large.

To resolve the foregoing technical problems, the embodiments of the present invention disclose the following technical solutions:
According to a first aspect, a method for acquiring uplink grant information is provided, where the method includes:
   obtaining, by user equipment UE, configuration signaling, where the configuration signaling includes a code channel number of a downlink control channel; and
   monitoring, by the UE on at least one code channel of the downlink control channel according to the configuration signaling, a channel that bears uplink grant information.

With reference to the first aspect, in a first possible implementation manner of the first aspect, the downlink control channel is a high speed shared control channel HS-SCCH; and
the channel that bears the uplink grant information includes: a channel whose channel format is the same as that of an enhanced dedicated channel-absolute grant channel E-AGCH, or a channel whose channel format is the same as that of an HS-SCCH.

With reference to the first possible implementation manner of the first aspect, in a second possible implementation manner of the first aspect, when a channel format of the channel that bears the uplink grant information is the same as that of an E-AGCH, the monitoring, by the UE on at least one code channel of the downlink control channel according to the configuration signaling, a channel that bears uplink grant information includes:
monitoring, by the UE according to code channel numbers, of all HS-SCCHs, included in the configuration signaling, on all code sub-channels of code channels corresponding to the code channel numbers of all the HS-SCCHs, the channel that bears the uplink grant information; or,
monitoring, by the UE according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information; or,
monitoring, by the UE according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

With reference to the first possible implementation manner of the first aspect, in a third possible implementation manner of the first aspect, when a channel format of the channel that bears the uplink grant information is the same as that of an E-AGCH, the monitoring, by the UE on at least one code channel of the downlink control channel according to the configuration signaling, a channel that bears uplink grant information includes:
determining, by the UE according to a time identifier or a UE identifier, from code channel numbers, of HS-SCCHs, included in the configuration signaling, a code channel number of at least one HS-SCCH that needs to be monitored in each subframe, where the time identifier includes a frame number, and/or a subframe number; and
monitoring, by the UE on at least one code sub-channel of an HS-SCCH code channel corresponding to the determined code channel number of the at least one HS-SCCH, the channel that bears the uplink grant information.

With reference to the first possible implementation manner of the first aspect, in a fourth possible implementation manner of the first aspect, when a channel format of the channel that bears the uplink grant information is the same as that of an HS-SCCH, the monitoring, by the UE on at least one code channel of the downlink control channel according to the configuration signaling, a channel that bears uplink grant information includes:
detecting, by the UE, when an HS-SCCH is obtained by means of monitoring on an HS-SCCH code channel according to the configuration signaling, whether the HS-SCCH meets an uplink grant information bearing condition; and
when a detection result is that the HS-SCCH meets the uplink grant information bearing condition, determining that the HS-SCCH obtained by means of monitoring is the channel that bears the uplink grant information.

With reference to the first aspect, in a fifth possible implementation manner of the first aspect, that the detection result is that the HS-SCCH meets the uplink grant information bearing condition includes:
the detection result is that the HS-SCCH includes a radio network temporary identifier RNTI pre-configured by a network device; or,
the detection result is that a code channel number of the HS-SCCH code channel of the HS-SCCH obtained by means of monitoring is a pre-configured code channel number; or,
the detection result is that a bit value of a preset bit of the HS-SCCH is the same as a pre-defined bit value.

According to a second aspect, user equipment UE is provided, where the UE includes:
an obtaining unit, configured to obtain configuration signaling, where the configuration signaling includes a code channel number of a downlink control channel; and
a monitoring unit, configured to monitor, on at least one code channel of the downlink control channel according to the configuration signaling obtained by the obtaining unit, a channel that bears uplink grant information.

With reference to the second aspect, in a first possible implementation manner of the second aspect, the downlink control channel is an HS-SCCH; and
the channel that bears the uplink grant information includes: a channel whose channel format is the same as that of an enhanced dedicated channel-absolute grant channel E-AGCH, or a channel whose channel format is the same as that of an HS-SCCH.

With reference to the first possible implementation manner of the second aspect, in a second possible implementation manner of the second aspect, when a channel format of the channel that bears the uplink grant information is the same as that of an E-AGCH, the monitoring unit includes at least one of the following subunits:
a first monitoring subunit, configured to monitor, according to code channel numbers, of all HS-SCCHs, included in the configuration signaling, on all code sub-channels of code channels corresponding to the code channel numbers of all the HS-SCCHs, the channel that bears the uplink grant information;
a second monitoring subunit, configured to monitor, according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information; and
a third monitoring subunit, configured to monitor, according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

With reference to the first possible implementation manner of the second aspect, in a third possible implementation manner of the second aspect, when a channel format of the channel that bears the uplink grant information is the same as that of an E-AGCH, the monitoring unit includes:
a code channel number determining subunit, configured to determine, according to a time identifier or a UE identifier, from code channel numbers, of HS-SCCHs, included in the configuration signaling, a code channel number of at least one HS-SCCH that needs to be monitored in each subframe, where the time identifier includes a frame number, and/or a subframe number; and
a fourth monitoring subunit, configured to monitor, on at least one code sub-channel of an HS-SCCH code channel corresponding to the code channel number, of the at least one HS-SCCH, determined by the code channel number determining subunit, the channel that bears the uplink grant information.

With reference to the first possible implementation manner of the second aspect, in a fourth possible implementation manner of the second aspect, when a channel format of the channel that bears the uplink grant information is the same as that of an HS-SCCH, the monitoring unit includes:
a fifth monitoring subunit, configured to monitor an HS-SCCH on an HS-SCCH code channel according to the configuration signaling;
a condition detection subunit, configured to detect whether the HS-SCCH obtained by means of monitoring by the fifth monitoring subunit meets an uplink grant information bearing condition; and
a channel determining subunit, configured to: when a detection result of the condition detection subunit is that the HS-SCCH meets the uplink grant information bearing condition, determine that the HS-SCCH obtained by means of monitoring is the channel that bears the uplink grant information.

With reference to the fourth possible implementation manner of the second aspect, in a fifth possible implementation manner of the second aspect, that the detection result is that the HS-SCCH meets the uplink grant information bearing condition includes:
the detection result is that the HS-SCCH includes a radio network temporary identifier RNTI pre-configured by a network device; or,
the detection result is that a code channel number of the HS-SCCH code channel of the HS-SCCH obtained by means of monitoring is a pre-configured code channel number; or,
the detection result is that a bit value of a preset bit of the HS-SCCH is the same as a pre-defined bit value.

According to a third aspect, user equipment UE is provided, where the UE includes: a radio transceiver and a processor, where
the radio transceiver is configured to obtain configuration signaling, where the configuration signaling includes a code channel number of a downlink control channel; and
the processor is configured to monitor, on at least one code channel of the downlink control channel according to the configuration signaling, a channel that bears uplink grant information.

With reference to the third aspect, in a first possible implementation manner of the third aspect, the downlink control channel is a high speed shared control channel HS-SCCH; and
the channel that bears the uplink grant information includes: a channel whose channel format is the same as that of an enhanced dedicated channel-absolute grant channel E-AGCH, or a channel whose channel format is the same as that of an HS-SCCH.

With reference to the first possible implementation manner of the third aspect, in a second possible implementation manner of the third aspect, the processor is specifically configured to: when a channel format of the channel that bears the uplink grant information is the same as that of an E-AGCH, monitor, in at least one of the following manners on the at least one code channel of the downlink control channel according to the configuration signaling, the channel that bears the uplink grant information:
monitoring, according to code channel numbers, of all HS-SCCHs, included in the configuration signaling, on all code sub-channels of code channels corresponding to the code channel numbers of all the HS-SCCHs, the channel that bears the uplink grant information;
monitoring, according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information; and
monitoring, according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

With reference to the first possible implementation manner of the third aspect, in a third possible implementation manner of the third aspect, the processor is specifically configured to: when a channel format of the channel that bears the uplink grant information is the same as that of an E-AGCH, determine, according to a time identifier or a UE identifier, from code channel numbers, of HS-SCCHs, included in the configuration signaling, a code channel number of at least one HS-SCCH that needs to be monitored in each subframe, and monitor, on at least one code sub-channel of an HS-SCCH code channel corresponding to the determined code channel number of the at least one HS-SCCH, the channel that bears the uplink grant information, where the time identifier includes a frame number, and/or a subframe number.

With reference to the first possible implementation manner of the third aspect, in a fourth possible implementation manner of the third aspect, the processor is specifically configured to: when a channel format of the channel that bears the uplink grant information is the same as that of an HS-SCCH, detect, when an HS-SCCH is obtained by means of monitoring on an HS-SCCH code channel according to the configuration signaling, whether the HS-SCCH meets an uplink grant information bearing condition; and when a detection result is that the HS-SCCH meets the uplink grant information bearing condition, determine that the HS-SCCH obtained by means of monitoring is the channel that bears the uplink grant information.

With reference to the fourth possible implementation manner of the third aspect, in a fifth possible implementation manner of the third aspect, that the detection result is that the HS-SCCH meets the uplink grant information bearing condition includes:
the detection result is that the HS-SCCH includes a radio network temporary identifier RNTI pre-configured by a network device; or,
the detection result is that a code channel number of the HS-SCCH code channel of the HS-SCCH obtained by means of monitoring is a pre-configured code channel number; or,
the detection result is that a bit value of a preset bit of the HS-SCCH is the same as a pre-defined bit value.

According to a fourth aspect, a method for acquiring uplink grant information is provided, where the method includes:
obtaining, by a base station, configuration signaling, where the configuration signaling includes a code channel number of a downlink control channel that UE needs to monitor; and
sending, by the base station on at least one code channel of the downlink control channel according to the configuration signaling, a channel that bears uplink grant information of the UE, so that the UE monitors, on the at least one code channel of the downlink control channel, the channel that bears the uplink grant information.

With reference to the fourth aspect, in a first possible implementation manner of the fourth aspect, the downlink control channel is a high speed shared control channel HS-SCCH; and
the channel that bears the uplink grant information includes: a channel whose channel format is the same as that of an enhanced dedicated channel-absolute grant channel E-AGCH, or a channel whose channel format is the same as that of an HS-SCCH.

With reference to the first possible implementation manner of the fourth aspect, in a second possible implementation manner of the fourth aspect, when a channel format of the channel that bears the uplink grant information of the UE is the same as that of an E-AGCH, the sending, by the base station on at least one code channel of the downlink control channel according to the configuration signaling, a channel that bears uplink grant information of the UE includes:
sending, by the base station according to code channel numbers, of all HS-SCCHs, included in the configuration signaling, on all code sub-channels of code channels corresponding to the code channel numbers of all the HS-SCCHs, the channel that bears the uplink grant information of the UE; or,
sending, by the base station according to a code channel number, of at least one HS-SCCH, in the configuration signaling indicated in notification signaling sent to the UE, on at least one code sub-channel of an HS-SCCH code channel corresponding to the code channel number of the at least one HS-SCCH, the channel that bears the uplink grant information of the UE; or,
sending, by the base station according to a code channel number, of at least one HS-SCCH, in the configuration signaling agreed upon in advance by the base station and the UE, on at least one code sub-channel of an HS-SCCH code channel corresponding to the code channel number of the at least one HS-SCCH, the channel that bears the uplink grant information of the UE.

With reference to the first possible implementation manner of the fourth aspect, in a third possible implementation manner of the fourth aspect, when a channel format of the channel that bears the uplink grant information is the same as that of an E-AGCH, the sending, by the base station on at least one code channel of the downlink control channel according to the configuration signaling, a channel that bears uplink grant information of the UE includes:
determining, by the base station according to a time identifier or a UE identifier of the UE, from code channel numbers, of HS-SCCHs, included in the configuration signaling, a code channel number of at least one HS-SCCH that the UE needs to monitor in each subframe, where the time identifier includes a frame number, and/or a subframe number; and
sending, by the base station on at least one code sub-channel of an HS-SCCH code channel corresponding to the determined code channel number of the at least one HS-SCCH, the channel that bears the uplink grant information of the UE.

With reference to the first possible implementation manner of the fourth aspect, in a fourth possible implementation manner of the fourth aspect, when a channel format of the channel that bears the uplink grant information is the same as that of an HS-SCCH, the sending, by the base station on at least one code channel of the downlink control channel according to the configuration signaling, a channel that bears uplink grant information of the UE includes:
generating, by the base station, an HS-SCCH used to bear the uplink grant information of the UE, where the HS-SCCH meets an uplink grant information bearing condition; and
sending, by the base station according to the configuration signaling on an HS-SCCH code channel, the HS-SCCH used to bear the uplink grant information of the UE.

With reference to the fourth possible implementation manner of the fourth aspect, in a fifth possible implementation manner of the fourth aspect, that the HS-SCCH meets an uplink grant information bearing condition includes:
the HS-SCCH includes a pre-configured radio network temporary identifier RNTI; or,
a code channel number of an HS-SCCH code channel of the HS-SCCH is a pre-configured code channel number; or,
a bit value of a preset bit of the HS-SCCH is the same as a pre-defined bit value.

According to a fifth aspect, a base station is provided, where the base station includes:
an obtaining unit, configured to obtain configuration signaling, where the configuration signaling includes a code channel number of a downlink control channel that UE needs to monitor; and
a sending unit, configured to send, on at least one code channel of the downlink control channel according to the configuration signaling obtained by the obtaining unit, a channel that bears uplink grant information of the UE, so that the UE monitors, on the at least one code channel of the downlink control channel, the channel that bears the uplink grant information.

With reference to the fifth aspect, in a first possible implementation manner of the fifth aspect, the downlink control channel is a high speed shared control channel HS-SCCH; and
the channel that bears the uplink grant information includes: a channel whose channel format is the same as that of an enhanced dedicated channel-absolute grant channel E-AGCH, or a channel whose channel format is the same as that of an HS-SCCH.

With reference to the first possible implementation manner of the fifth aspect, in a second possible implementation manner of the fifth aspect, when a channel format of the channel that bears the uplink grant information of the UE is the same as that of an E-AGCH, the sending unit includes at least one of the following subunits:
a first sending subunit, configured to send, according to code channel numbers, of all HS-SCCHs, included in the configuration signaling, on all code sub-channels of code channels corresponding to the code channel numbers of all the HS-SCCHs, the channel that bears the uplink grant information of the UE;
a second sending subunit, configured to send, according to a code channel number, of at least one HS-SCCH, in the configuration signaling indicated in notification signaling sent to the UE, on at least one code sub-channel of an HS-SCCH code channel corresponding to the code channel number of the at least one HS-SCCH, the channel that bears the uplink grant information of the UE; and
a third sending subunit, configured to send, according to a code channel number, of at least one HS-SCCH, in the configuration signaling agreed upon in advance by the base station and the UE, on at least one code sub-channel of an HS-SCCH code channel corresponding to the code channel number of the at least one HS-SCCH, the channel that bears the uplink grant information of the UE.

With reference to the first possible implementation manner of the fifth aspect, in a third possible implementation manner of the fifth aspect, when a channel format of the channel that bears the uplink grant information is the same as that of an E-AGCH, the sending unit includes:
a code channel number determining subunit, configured to determine, according to a time identifier or a UE identifier of the UE, from code channel numbers, of HS-SCCHs, included in the configuration signaling, a code channel number of at least one HS-SCCH that the UE needs to monitor in each subframe, where the time identifier includes a frame number, and/or a subframe number; and
a fourth sending subunit, configured to send, on at least one code sub-channel of an HS-SCCH code channel corresponding to the code channel number, of the at least one HS-SCCH, determined by the code channel number determining subunit, the channel that bears the uplink grant information of the UE.

With reference to the first possible implementation manner of the fifth aspect, in a fourth possible implementation manner of the fifth aspect, when a channel format of the channel that bears the uplink grant information is the same as that of an HS-SCCH, the sending unit includes:
a channel generating subunit, configured to generate an HS-SCCH used to bear the uplink grant information of the UE, where the HS-SCCH meets an uplink grant information bearing condition; and
a fifth sending subunit, configured to send, according to the configuration signaling on an HS-SCCH code channel, the HS-SCCH that is generated by the channel generating subunit and that is used to bear the uplink grant information of the UE.

With reference to the fourth possible implementation manner of the fifth aspect, in a fifth possible implementation manner of the fifth aspect, that the HS-SCCH meets an uplink grant information bearing condition includes:
the HS-SCCH includes a pre-configured radio network temporary identifier RNTI; or,
a code channel number of an HS-SCCH code channel of the HS-SCCH is a pre-configured code channel number; or,
a bit value of a preset bit of the HS-SCCH is the same as a pre-defined bit value.

According to a sixth aspect, a base station is provided, where the base station includes: a transceiver and a processor, where
the transceiver is configured to obtain configuration signaling, where the configuration signaling includes a code channel number of a downlink control channel that UE needs to monitor; and
the processor is configured to send, on at least one code channel of the downlink control channel according to the configuration signaling by using the transceiver, a channel that bears uplink grant information of the UE, so that the UE monitors, on the at least one code channel of the downlink control channel, the channel that bears the uplink grant information.

With reference to the sixth aspect, in a first possible implementation manner of the sixth aspect, the downlink control channel is a high speed shared control channel HS-SCCH; and
the channel that bears the uplink grant information includes: a channel whose channel format is the same as that of an enhanced dedicated channel-absolute grant channel E-AGCH, or a channel whose channel format is the same as that of an HS-SCCH.

With reference to the first possible implementation manner of the sixth aspect, in a second possible implementation manner of the sixth aspect, the processor is specifically configured to: when a channel format of the channel that bears the uplink grant information is the same as that of an E-AGCH, send, in at least one of the following manners on the at least one code channel of the downlink control channel according to the configuration signaling by using the transceiver, the channel that bears the uplink grant information of the UE:
sending, according to code channel numbers, of all HS-SCCHs, included in the configuration signaling, on all code sub-channels of code channels corresponding to the code channel numbers of all the HS-SCCHs by using the transceiver, the channel that bears the uplink grant information of the UE;
sending, by the base station according to a code channel number, of at least one HS-SCCH, in the configuration signaling indicated in notification signaling sent to the UE, on at least one code sub-channel of an HS-SCCH code channel corresponding to the code channel number of the at least one HS-SCCH by using the transceiver, the channel that bears the uplink grant information of the UE; and
sending, by the base station according to a code channel number, of at least one HS-SCCH, in the configuration signaling agreed upon in advance by the base station and the UE, on at least one code sub-channel of an HS-SCCH code channel corresponding to the code channel number of the at least one HS-SCCH by using the transceiver, the channel that bears the uplink grant information of the UE.

With reference to the first possible implementation manner of the sixth aspect, in a third possible implementation manner of the sixth aspect, the processor is specifically configured to: when a channel format of the channel that bears the uplink grant information is the same as that of an E-AGCH, determine, according to a time identifier or a UE identifier of the UE, from code channel numbers, of HS-SCCHs, included in the configuration signaling, a code channel number of at least one HS-SCCH that the UE needs to monitor in each subframe, and send, on at least one code sub-channel of an HS-SCCH code channel corresponding to the determined code channel number of the at least one HS-SCCH by using the transceiver, the channel that bears the uplink grant information of the UE, where the time identifier includes a frame number, and/or a subframe number.

With reference to the first possible implementation manner of the sixth aspect, in a fourth possible implementation manner of the sixth aspect, the processor is specifically configured to: when a channel format of the channel that bears the uplink grant information is the same as that of an HS-SCCH, generate an HS-SCCH used to bear the uplink grant information of the UE, and send, according to the configuration signaling on an HS-SCCH code channel by using the transceiver, the HS-SCCH used to bear the uplink grant information of the UE, where the HS-SCCH meets an uplink grant information bearing condition.

With reference to the fourth possible implementation manner of the sixth aspect, in a fifth possible implementation manner of the sixth aspect, that the HS-SCCH meets an uplink grant information bearing condition includes:
the HS-SCCH includes a pre-configured radio network temporary identifier RNTI; or,
a code channel number of an HS-SCCH code channel of the HS-SCCH is a pre-configured code channel number; or,
a bit value of a preset bit of the HS-SCCH is the same as a pre-defined bit value.

In the embodiments of the present invention, UE obtains configuration signaling that includes a code channel number of a downlink control channel, and monitors, on at least one code channel of the downlink control channel according to the configuration signaling, a channel that bears uplink grant information. During implementation of HSUPA by applying the embodiments of the present invention, code channel resources of a downlink control channel that are supported by the UE are more than code channel resources of an uplink control channel; therefore, when a channel that bears uplink grant information is sent by using a code channel resource of the downlink control channel, flexibility of scheduling the UE by a system can be increased, and overheads of downlink code channel resources can also be reduced.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1A is a flowchart of an embodiment of a method for acquiring uplink grant information according to the present invention;
FIG. 1B is a flowchart of another embodiment of a method for acquiring uplink grant information according to the present invention;
FIG. 2 is a flowchart of another embodiment of a method for acquiring uplink grant information according to the present invention;
FIG. 3 is a flowchart of another embodiment of a method for acquiring uplink grant information according to the present invention;
FIG. 4 is a flowchart of another embodiment of a method for acquiring uplink grant information according to the present invention;
FIG. 5 is a block diagram of an embodiment of UE according to the present invention;
FIG. 6 is a block diagram of another embodiment of UE according to the present invention;
FIG. 7 is a block diagram of an embodiment of a base station according to the present invention; and
FIG. 8 is a block diagram of another embodiment of a base station according to the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

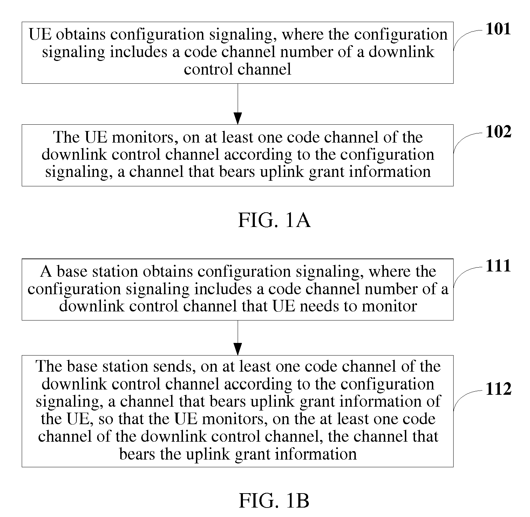

FIG. 1A is a flowchart of an embodiment of a method for acquiring uplink grant information according to the present invention. This embodiment is described from a UE side.

Step 101: UE obtains configuration signaling, where the configuration signaling includes a code channel number of a downlink control channel.

In this embodiment, in an HSPA-based system, the downlink control channel may be specifically an HS-SCCH, and the HS-SCCH is generally used to bear downlink grant information. A network device such as a radio network controller (Radio Network Controller, RNC) configures, for the UE, an HS-SCCH code channel that needs to be monitored, then generates configuration signaling that includes a code channel number of the HS-SCCH code channel, and may transmit the configuration signaling to the UE by using a base station, where the HS-SCCH code channel is a code resource used to transmit an HS-SCCH, and each HS-SCCH code channel may further include different quantities of code sub-channels according to different spreading factors. The configuration signaling may be specifically radio resource control (Radio Resource Control, RRC) signaling

Step 102: The UE monitors, on at least one code channel of the downlink control channel according to the configuration signaling, a channel that bears uplink grant information.

In this embodiment of the present invention, the uplink grant information mainly refers to information that an E-AGCH bears in the prior art, and may include: a UE allowed maximum power ratio of E-DCH dedicated physical data channel (E-DCH Dedicated Physical Data Channel, E-DPDCH) to an E-DCH dedicated physical control channel (E-DCH Dedicated Physical Control Channel, E-DPCCH), bit values of activated and deactivated hybrid automatic repeat request (Hybrid Automatic Repeat Request, HARQ) processes of the UE, a UE identifier, and the like.

In this embodiment of the present invention, the channel that bears the uplink grant information may include: a channel whose channel format is the same as that of an E-AGCH, or a channel whose channel format is the same as that of an HS-SCCH. For a channel using either channel format above, in this embodiment of the present invention, the channel that bears the uplink grant information is transmitted by using a code channel of a downlink grant channel.

In an optional implementation manner, when a channel format of the channel that bears the uplink grant information is the same as that of an E-AGCH, the UE may monitor, according to code channel numbers, of all HS-SCCHs, included in the configuration signaling, on all code sub-channels of code channels corresponding to the code channel numbers of all the HS-SCCHs, the channel that bears the uplink grant information.

In another optional implementation manner, when a channel format of the channel that bears the uplink grant information is the same as that of an E-AGCH, the UE may also monitor, according to a code channel number, of at least one HS-SCCH, in the configuration signaling indicated in notification signaling sent by the network device, on at least one code sub-channel of an HS-SCCH code channel corresponding to the code channel number of the at least one HS-SCCH, the channel that bears the uplink grant information.

In another optional implementation manner, when a channel format of the channel that bears the uplink grant information is the same as that of an E-AGCH, the UE may also monitor, according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

In another optional implementation manner, when a channel format of the channel that bears the uplink grant information is the same as that of an E-AGCH, the UE may also determine, according to a time identifier or a UE identifier, from code channel numbers, of HS-SCCHs, included in the configuration signaling, a code channel number of at least one HS-SCCH that needs to be monitored in each subframe, and monitor, on at least one code sub-channel of an HS-SCCH code channel corresponding to the determined code channel number of the at least one HS-SCCH, the channel that bears the uplink grant information, where the time identifier may include a frame number, and/or a subframe number.

In another optional implementation manner, when a channel format of the channel that bears the uplink grant information is the same as that of an HS-SCCH, the UE may detect, when an HS-SCCH is obtained by means of monitoring on an HS-SCCH code channel according to the configuration signaling, whether the HS-SCCH obtained by means of monitoring meets an uplink grant information bearing condition, and when a detection result is that the HS-SCCH meets the uplink grant information bearing condition, determine that the HS-SCCH obtained by means of monitoring is the channel that bears the uplink grant information.

It can be seen from the foregoing embodiment that, code channel resources of a downlink control channel that are supported by the UE are more than code channel resources of an uplink control channel; therefore, when a channel that bears uplink grant information is sent by using a code channel resource of the downlink control channel, flexibility of scheduling the UE by a system can be increased, and overheads of downlink code channel resources can also be reduced.

FIG. 1B is a flowchart of another embodiment of a method for acquiring uplink grant information according to the present invention. This embodiment is described from a base station side.

Step 111: A base station obtains configuration signaling, where the configuration signaling includes a code channel number of a downlink control channel that UE needs to monitor.

In this embodiment, a network device such as an RNC may configure, for the UE, an HS-SCCH code channel that needs to be monitored, then generate configuration signaling that includes a code channel number of the HS-SCCH code channel, and transmit the configuration signaling by using the base station, where the HS-SCCH code channel is a code resource used to transmit an HS-SCCH, and each HS-SCCH code channel may further include different quantities of code sub-channels according to different spreading factors. The configuration signaling may be specifically RRC signaling.

In this embodiment of the present invention, the uplink grant information mainly refers to information that an E-AGCH bears in the prior art, and may include: a UE allowed maximum power ratio of E-DPDCH to an E-DPCCH, bit values of activated and deactivated HARQ processes of the UE, a UE identifier, and the like.

Step 112: The base station sends, on at least one code channel of the downlink control channel according to the configuration signaling, a channel that bears uplink grant information of the UE, so that the UE monitors, on the at least one code channel of the downlink control channel, the channel that bears the uplink grant information.

In an optional implementation manner, when a channel format of the channel that bears the uplink grant information is the same as that of an E-AGCH, the base station may send, according to code channel numbers, of all HS-SCCHs, included in the configuration signaling, on all code sub-channels of code channels corresponding to the code channel numbers of all the HS-SCCHs, the channel that bears the uplink grant information of the UE.

In another optional implementation manner, when a channel format of the channel that bears the uplink grant information is the same as that of an E-AGCH, the base station also sends, according to a code channel number, of at least one HS-SCCH, in the configuration signaling indicated in notification signaling sent to the UE, on at least one code sub-channel of an HS-SCCH code channel corresponding to the code channel number of the at least one HS-SCCH, the channel that bears the uplink grant information of the UE.

In another optional implementation manner, when a channel format of the channel that bears the uplink grant information is the same as that of an E-AGCH, the base station may send, according to a code channel number, of at least one HS-SCCH, in the configuration signaling agreed upon in advance by the base station and the UE, on at least one code sub-channel of an HS-SCCH code channel corresponding to the code channel number of the at least one HS-SCCH, the channel that bears the uplink grant information of the UE.

In another optional implementation manner, when a channel format of the channel that bears the uplink grant information is the same as that of an E-AGCH, the base station may determine, according to a time identifier or a UE identifier of the UE, from code channel numbers, of HS-SCCHs, included in the configuration signaling, a code channel number of at least one HS-SCCH that the UE needs to monitor in each subframe, and send, on at least one code sub-channel of an HS-SCCH code channel corresponding to the determined code channel number of the at least one HS-SCCH, the channel that bears the uplink grant information of the UE, where the time identifier includes a frame number, and/or a subframe number.

In another optional implementation manner, when a channel format of the channel that bears the uplink grant information is the same as that of an HS-SCCH, the base station may generate an HS-SCCH used to bear the uplink grant information of the UE, and send, according to the configuration signaling on an HS-SCCH code channel, the HS-SCCH used to bear the uplink grant information of the UE, where the HS-SCCH meets an uplink grant information bearing condition.

It can be seen from the foregoing embodiment that, code channel resources of a downlink control channel that are supported by the UE are more than code channel resources of an uplink control channel; therefore, when a channel that bears uplink grant information is sent by using a code channel resource of the downlink control channel, flexibility of scheduling the UE by a system can be increased, and overheads of downlink code channel resources can also be reduced.

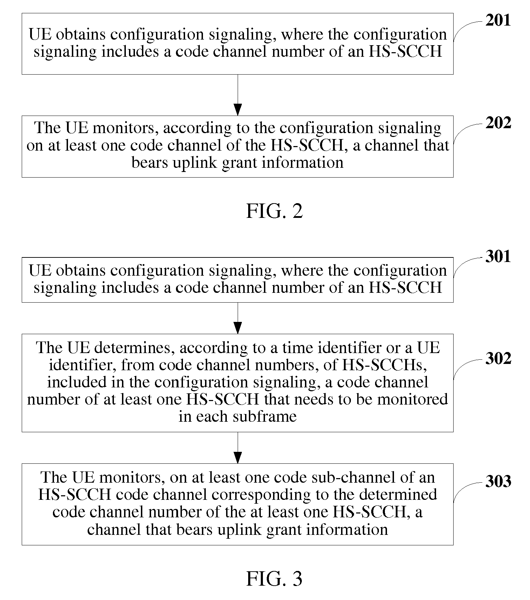

FIG. 2 is a flowchart of another embodiment of a method for acquiring uplink grant information according to the present invention.

Step 201: UE obtains configuration signaling, where the configuration signaling includes a code channel number of an HS-SCCH.

In this embodiment, a network device such as an RNC may configure, for the UE, an HS-SCCH code channel that needs to be monitored, then generate configuration signaling that includes a code channel number of the HS-SCCH code channel, and transmit the configuration signaling to the UE by using a base station, where the HS-SCCH code channel is a code resource used to transmit an HS-SCCH, and each HS-SCCH code channel may further include different quantities of code sub-channels according to different spreading factors. The configuration signaling may be specifically RRC signaling.

Step 202: The UE monitors, according to the configuration signaling on at least one code channel of the HS-SCCH, a channel that bears uplink grant information.

In this embodiment of the present invention, the uplink grant information mainly refers to information that an E-AGCH bears in the prior art, and may include: a UE allowed maximum power ratio of E-DPDCH to an E-DPCCH, bit values of activated and deactivated HARQ processes of the UE, a UE identifier, and the like.

A channel format of the channel that is used to bear uplink grant information and that is transmitted by using an HS-SCCH code channel is the same as that of an E-AGCH.

In an optional implementation manner, the UE may monitor, according to code channel numbers, of all HS-SCCHs, included in the configuration signaling, on all code sub-channels of code channels corresponding to the code channel numbers of all the HS-SCCHs, the channel that bears the uplink grant information. For example, a network device configures N HS-SCCH code channels for the UE, and assuming that N is 4, code channel numbers are C (128, N0), C (128, N1), C (128, N2), and C (128, N3) respectively. When a spreading factor is 128, code sub-channel numbers of code sub-channels of the foregoing four HS-SCCH code channels are C (256, 2N0-1), C (256, 2N0), C (256, 2N1-1), C (256, 2N1), C (256, 2N2-1), C (256, 2N2), C (256, 2N3-1), and C (256, 2N3), and the UE monitors E-AGCHs on the code sub-channels of all the four HS-SCCH code channels, that is, the UE monitors E-AGCHs on the eight code sub-channels whose code sub-channel numbers are C (256, 2N0-1), C (256, 2N0), C (256, 2N1-1), C (256, 2N1), C (256, 2N2-1), C (256, 2N2), C (256, 2N3-1), and C (256, 2N3).

In another optional implementation manner, the UE may monitor, according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information. For example, the network device configures N HS-SCCH code channels for the UE, and assuming that N is 4, code channel numbers are C (128, N0), C (128, N1), C (128, N2), and C (128, N3) respectively. When a spreading factor is 128, code sub-channel numbers of code sub-channels of the foregoing four HS-SCCH code channels are C (256, 2N0-1), C (256, 2N0), C (256, 2N1-1), C (256, 2N1), C (256, 2N2-1), C (256, 2N2), C (256, 2N3-1), and C (256, 2N3). The network device may notify, by sending notification signaling to the UE, the UE of a code channel number of an HS-SCCH code channel used to transmit the channel that bears the uplink grant information. Assuming that a code channel number included in the notification signaling is C (128, N0), the UE may monitor an E-AGCH on at least one code sub-channel of a code channel corresponding to the code channel number C (128, N0), that is, on two code sub-channels whose code sub-channel numbers are C (256, 2N0-1) and C (256, 2N0). It should be noted that, the notification signaling and the configuration signaling may be combined as one piece of signaling, or the notification signaling may be sent independently of the configuration signaling, which is not limited in this embodiment of the present invention.

In another optional implementation manner, the UE may monitor, according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information. For example, the network device configures N HS-SCCH code channels for the UE, and assuming that N is 4, code channel numbers are C (128, N0), C (128, N1), C (128, N2), and C (128, N3) respectively. When a spreading factor is 128, code sub-channel numbers of code sub-channels of the foregoing four HS-SCCH code channels are C (256, 2N0-1), C (256, 2N0), C (256, 2N1-1), C (256, 2N1), C (256, 2N2-1), C (256, 2N2), C (256, 2N3-1), and C (256, 2N3). Assuming that a code channel corresponding to the code channel number C (128, N0) of a first HS-SCCH included in the configuration signaling agreed upon in advance by the network device and the UE is used to transmit the channel that bears the uplink grant information, the UE may monitor an E-AGCH on at least one code sub-channel of the code channel corresponding to the code channel number C(128, N0), that is, on two code sub-channels whose code sub-channel numbers are C (256, 2N0-1) and C (256, 2N0).

It can be seen from the foregoing embodiment that, code channel resources of an HS-SCCH that are supported by UE are more than code channel resources of an E-AGCH; therefore, when a channel that bears uplink grant information is sent by using a code channel resource of the HS-SCCH, flexibility of scheduling the UE by a system can be increased, and overheads of downlink code channel resources can also be reduced.

FIG. 3 is a flowchart of another embodiment of a method for acquiring uplink grant information according to the present invention.

Step 301: UE obtains configuration signaling, where the configuration signaling includes a code channel number of an HS-SCCH.

In this embodiment, a network device such as an RNC may configure, for the UE, an HS-SCCH code channel that needs to be monitored, then generate configuration signaling that includes a code channel number of the HS-SCCH code channel, and transmit the configuration signaling to the UE by using a base station, where the HS-SCCH code channel is a code resource used to transmit an HS-SCCH, and each HS-SCCH code channel may further include different quantities of code sub-channels according to different spreading factors. The configuration signaling may be specifically RRC signaling.

Step 302: The UE determines, according to a time identifier or a UE identifier, from code channel numbers, of HS-SCCHs, included in the configuration signaling, a code channel number of at least one HS-SCCH that needs to be monitored in each subframe.

In this embodiment, the time identifier may include a frame number, and/or a subframe number; and the UE identifier may include a radio network temporary identifier (Radio Network Temporary Identity, RNTI). In this embodiment, each subframe corresponds to a monitoring TTI of the UE.

For example, the network device configures N HS-SCCH code channels for the UE, and assuming that N is 4, code channel numbers are C (128, N0), C (128, N1), C (128, N2), and C (128, N3) respectively. When a spreading factor is 128, code sub-channel numbers of code sub-channels of the foregoing four HS-SCCH code channels are C (256, 2N0-1), C (256, 2N0), C (256, 2N1-1), C (256, 2N1), C (256, 2N2-1), C (256, 2N2), C (256, 2N3-1), and C (256, 2N3). In an optional implementation manner, when a code channel number of an HS-SCCH is determined according to a time identifier, for a TTI, a frame number corresponding to the TTI is a CFN, and a subframe number corresponding to the TTI is an SFN, the UE may determine, when 5*CFN+SFN is an odd number, that code sub-channel numbers of code sub-channels that need to be monitored are C (256, 2N0-1), C (256, 2N1-1), C (256, 2N2-1), and C (256, 2N3-1), and determine, when 5*CFN+SFN is an even number, that code sub-channel numbers of code sub-channels that need to be monitored are C (256, 2N0), C (256, 2N1), C (256, 2N2), and C (256, 2N3). In another optional implementation manner, when a code channel number of an HS-SCCH is determined according to a UE identifier, the UE may determine, in a TTI with an RNTI being an odd number, that code sub-channel numbers of code sub-channels that need to be monitored are C (256, 2N0-1), C (256, 2N1-1), C (256, 2N2-1), and C (256, 2N3-1), and determine, when an RNTI is an even number, that code sub-channel numbers of code sub-channels that need to be monitored are C (256, 2N0), C (256, 2N1), C (256, 2N2), and C (256, 2N3).

Step 303: The UE monitors, on at least one code sub-channel of an HS-SCCH code channel corresponding to the determined code channel number of the at least one HS-SCCH, a channel that bears uplink grant information.

In this embodiment of the present invention, the uplink grant information mainly refers to information that an E-AGCH bears in the prior art, and may include: a UE allowed maximum power ratio of E-DPDCH to an E-DPCCH, bit values of activated and deactivated HARQ processes of the UE, a UE identifier, and the like. After a code channel number of at least one HS-SCCH that needs to be monitored in each subframe is determined according to a time identifier or a UE identifier in step 302, the UE may monitor, on at least one code sub-channel of an HS-SCCH code channel corresponding to the determined code channel number of the at least one HS-SCCH, the channel that bears the uplink grant information. In this embodiment, a channel format of a channel that is used to bear uplink grant information and that is transmitted by using an HS-SCCH code channel is the same as that of an E-AGCH.

It can be seen from the foregoing embodiment that, code channel resources of an HS-SCCH that are supported by UE are more than code channel resources of an E-AGCH; therefore, when a channel that bears uplink grant information is sent by using a code channel resource of the HS-SCCH, flexibility of scheduling the UE by a system can be increased, and overheads of downlink code channel resources can also be reduced; moreover, because the UE monitors different code channel resources of the HS-SCCH on different subframes, a probability of collision caused when multiple UEs use code channel resources of a same HS-SCCH for a long time can be avoided, and the scheduling flexibility of the system is further increased.

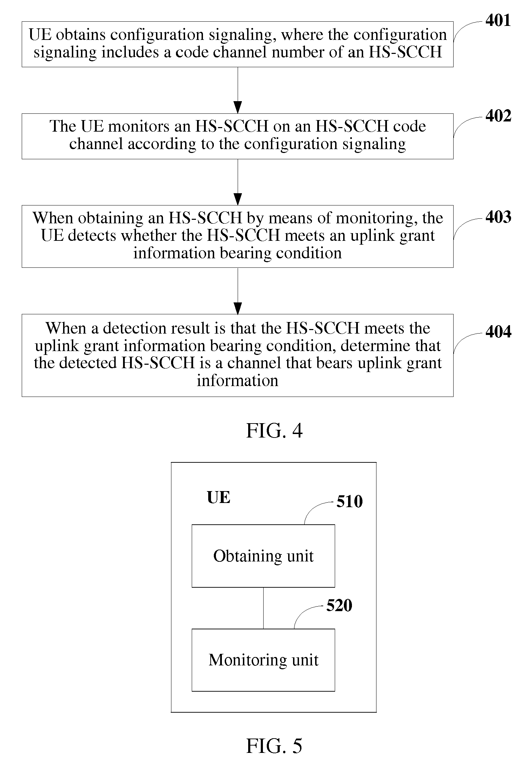

FIG. 4 is a flowchart of another embodiment of a method for acquiring uplink grant information according to the present invention.

Step 401: UE obtains configuration signaling, where the configuration signaling includes a code channel number of an HS-SCCH.

In this embodiment, a network device such as an RNC may configure, for the UE, an HS-SCCH code channel that needs to be monitored, then generate configuration signaling that includes a code channel number of the HS-SCCH code channel, and transmit the configuration signaling to the UE by using a base station, where the HS-SCCH code channel is a code resource used to transmit an HS-SCCH, and each HS-SCCH code channel may further include different quantities of code sub-channels according to different spreading factors. The configuration signaling may be specifically RRC signaling.

Step 402: The UE monitors an HS-SCCH on an HS-SCCH code channel according to the configuration signaling.

Step 403: When obtaining an HS-SCCH by means of monitoring, the UE detects whether the HS-SCCH meets an uplink grant information bearing condition.

In this embodiment, a channel format of a channel that is used to bear uplink grant information and that is transmitted by using an HS-SCCH code channel is the same as that of an HS-SCCH; therefore, the UE may monitor an HS-SCCH on the HS-SCCH code channel according to the configuration signaling. However, to identify, from HS-SCCHs, the channel that bears the uplink grant information, when obtaining an HS-SCCH by means of monitoring, the UE needs to detect whether the HS-SCCH meets the uplink grant information bearing condition.

The UE may detect, in any of the following manners, whether the uplink grant information bearing condition is met: the UE may detect whether the HS-SCCH obtained by means of monitoring includes an RNTI pre-configured by the network device, and if the HS-SCCH obtained by means of monitoring includes the RNTI pre-configured by the network device, it indicates that the HS-SCCH meets the uplink grant information bearing condition; the UE may also detect whether a code channel number of an HS-SCCH code channel of the HS-SCCH obtained by means of monitoring is a pre-configured code channel number, and if the code channel number of the HS-SCCH code channel of the HS-SCCH obtained by means of monitoring is the pre-configured code channel number, it indicates that the HS-SCCH meets the uplink grant information bearing condition; and the UE may also detect whether a bit value of a preset bit of the HS-SCCH obtained by means of monitoring is the same as a pre-defined bit value, and if the bit value of the preset bit of the HS-SCCH obtained by means of monitoring is the same as that of the pre-defined bit value, it indicates that the HS-SCCH meets the uplink grant information bearing condition.

Step 404: When a detection result is that the HS-SCCH meets the uplink grant information bearing condition, determine that the HS-SCCH obtained by means of monitoring is a channel that bears uplink grant information.

In this embodiment of the present invention, the uplink grant information mainly refers to information that an E-AGCH bears in the prior art, and may include: a UE allowed maximum power ratio of E-DPDCH to an E-DPCCH, bit values of activated and deactivated HARQ processes of the UE, a UE identifier, and the like.

In an optional implementation manner, it is assumed that that the UE detects that the HS-SCCH meets the uplink grant information bearing condition is specifically that the HS-SCCH includes the RNTI pre-configured by the network device. For example, the network device configures N HS-SCCH code channels for the UE, assuming that N is 4, code channel numbers are C (128, N0), C (128, N1), C (128, N2), and C (128, N3) respectively, and the network device pre-configures an RNTIa for the UE. After obtaining an HS-SCCH by means of monitoring and when checking that the HS-SCCH includes the RNTIa, the UE conforms that the HS-SCCH bears the uplink grant information.

In another optional implementation manner, it is assumed that that the UE detects that the HS-SCCH meets the uplink grant information bearing condition is specifically that the code channel number of the HS-SCCH is the pre-configured code channel number. For example, the network device configures N HS-SCCH code channels for the UE, assuming that N is 4, code channel numbers are C (128, N0), C (128, N1), C (128, N2), and C (128, N3) respectively, and the network device notifies, in a signaling notification or a pre-defined manner, the UE of the pre-configured code channel number. Assuming that the pre-configured code channel number is C (128, N0), after detecting an HS-SCCH, the UE checks a code channel number of the HS-SCCH, and when the code channel number is C (128, N0), the UE knows that one HS-SCCH bears the uplink grant information. When detecting the HS-SCCH, the UE conforms that the HS-SCCH bears the uplink grant information.

In another optional implementation manner, it is assumed that that the UE detects that the HS-SCCH meets the uplink grant information bearing condition is specifically that a bit value of a preset bit of the HS-SCCH is the same as the pre-defined bit value. For example, the network device configures N HS-SCCH code channels for the UE, assuming that N is 4, code channel numbers are C (128, N0), C (128, N1), C (128, N2), and C (128, N3) respectively, and the network device defines some bits in an HS-SCCH as special values in a pre-defined manner. For example, bit values of the first three bits are 0. After obtaining an HS-SCCH by means of monitoring, the UE checks bit values of the first three bits of the HS-SCCH, and when the bit values of the three bits are 0, the UE conforms that the HS-SCCH bears the uplink grant information.

It can be seen from the foregoing embodiment that, code channel resources of an HS-SCCH that are supported by UE are more than code channel resources of an E-AGCH; therefore, when a channel that bears uplink grant information is sent by using a code channel resource of the HS-SCCH, flexibility of scheduling the UE by a system can be increased, and overheads of downlink code channel resources can also be reduced.

Corresponding to the embodiments of the method for acquiring uplink grant information in the present invention, the present invention further provides embodiments of UE and a base station.

FIG. 5 is a block diagram of an embodiment of UE according to the present invention.

The UE includes: an obtaining unit 510 and a monitoring unit 520.

The obtaining unit 510 is configured to obtain configuration signaling, where the configuration signaling includes a code channel number of a downlink control channel.

The monitoring unit 520 is configured to monitor, on at least one code channel of the downlink control channel according to the configuration signaling obtained by the obtaining unit 510, a channel that bears uplink grant information.

In this embodiment, the downlink control channel may be an HS-SCCH; and the channel that bears the uplink grant information may include: a channel whose channel format is the same as that of an enhanced dedicated channel-absolute grant channel E-AGCH, or a channel whose channel format is the same as that of an HS-SCCH.

In an optional implementation manner:
when a channel format of the channel that bears the uplink grant information is the same as that of an E-AGCH, the monitoring unit 520 may include at least one of the following subunits (not shown in FIG. 5):
   a first monitoring subunit, configured to monitor, according to code channel numbers, of all HS-SCCHs, included in the configuration signaling, on all code sub-channels of code channels corresponding to the code channel numbers of all the HS-SCCHs, the channel that bears the uplink grant information;
   a second monitoring subunit, configured to monitor, according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information; and
   a third monitoring subunit, configured to monitor, according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

In another optional implementation manner:
when a channel format of the channel that bears the uplink grant information is the same as that of an E-AGCH, the monitoring unit 520 may include (not shown in FIG. 5):
   a code channel number determining subunit, configured to determine, according to a time identifier or a UE identifier, from code channel numbers, of HS-SCCHs, included in the configuration signaling, a code channel number of at least one HS-SCCH that needs to be monitored in each subframe, where the time identifier includes a frame number, and/or a subframe number; and
   a fourth monitoring subunit, configured to monitor, on at least one code sub-channel of an HS-SCCH code channel corresponding to the code channel number, of the at least one HS-SCCH, determined by the code channel number determining subunit, the channel that bears the uplink grant information.

In another optional implementation manner:
when a channel format of the channel that bears the uplink grant information is the same as that of an HS-SCCH, the monitoring unit 520 may include (not shown in FIG. 5):
   a fifth monitoring subunit, configured to monitor an HS-SCCH on an HS-SCCH code channel according to the configuration signaling;
   a condition detection subunit, configured to detect whether the HS-SCCH obtained by means of monitoring by the fifth monitoring subunit meets an uplink grant information bearing condition; and
   a channel determining subunit, configured to: when a detection result of the condition detection subunit is that the HS-SCCH meets the uplink grant information bearing condition, determine that the HS-SCCH obtained by means of monitoring is the channel that bears the uplink grant information.

That the detection result is that the HS-SCCH meets the uplink grant information bearing condition may include: the detection result is that the HS-SCCH includes a radio network temporary identifier RNTI pre-configured by a network device; or, the detection result is that a code channel number of the HS-SCCH code channel of the HS-SCCH obtained by means of monitoring is a pre-configured code channel number; or, the detection result is that a bit value of a preset bit of the HS-SCCH is the same as a pre-defined bit value.

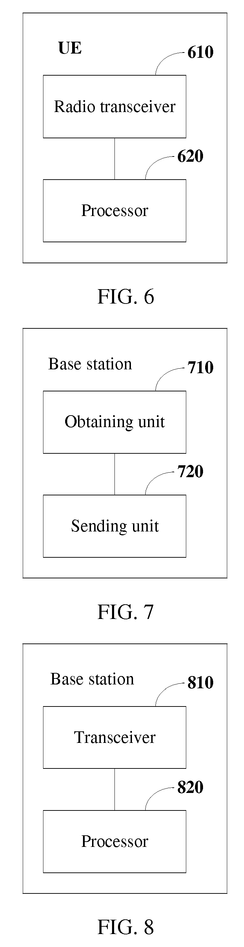

FIG. 6 is a block diagram of another embodiment of UE according to the present invention.

The UE includes: a radio transceiver 610 and a processor 620.

The radio transceiver 610 is configured to obtain configuration signaling, where the configuration signaling includes a code channel number of a downlink control channel.

The processor 620 is configured to monitor, according to the configuration signaling on at least one code channel of the downlink control channel, a channel that bears uplink grant information.

In this embodiment, the downlink control channel may be an HS-SCCH; and the channel that bears the uplink grant information may include: a channel whose channel format is the same as that of an enhanced dedicated channel-absolute grant channel E-AGCH, or a channel whose channel format is the same as that of an HS-SCCH.

In an optional implementation manner:
the processor 620 may be specifically configured to: when a channel format of the channel that bears the uplink grant information is the same as that of an E-AGCH, monitor, in at least one of the following manners on the at least one code channel of the downlink control channel according to the configuration signaling, the channel that bears the uplink grant information: monitoring, according to code channel numbers, of all HS-SCCHs, included in the configuration signaling, on all code sub-channels of code channels corresponding to the code channel numbers of all the HS-SCCHs, the channel that bears the uplink grant information; monitoring, according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information; and monitoring, according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

In another optional implementation manner:
the processor 620 may be specifically configured to: when a channel format of the channel that bears the uplink grant information is the same as that of an E-AGCH, determine, according to a time identifier or a UE identifier, from code channel numbers, of HS-SCCHs, included in the configuration signaling, a code channel number of at least one HS-SCCH that needs to be monitored in each subframe, and monitor, on at least one code sub-channel of an HS-SCCH code channel corresponding to the determined code channel number of the at least one HS-SCCH, the channel that bears the uplink grant information, where the time identifier includes a frame number, and/or a subframe number.

In another optional implementation manner:
the processor 620 may be specifically configured to: when a channel format of the channel that bears the uplink grant information is the same as that of an HS-SCCH, detect, when an HS-SCCH is obtained by means of monitoring on an HS-SCCH code channel according to the configuration signaling, whether the HS-SCCH meets an uplink grant information bearing condition; and when a detection result is that the HS-SCCH meets the uplink grant information bearing condition, determine that the HS-SCCH obtained by means of monitoring is the channel that bears the uplink grant information.

That the detection result is that the HS-SCCH meets the uplink grant information bearing condition may include: the detection result is that the HS-SCCH includes a radio network temporary identifier RNTI pre-configured by a network device; or, the detection result is that a code channel number of the HS-SCCH code channel of the HS-SCCH obtained by means of monitoring is a pre-configured code channel number; or, the detection result is that a bit value of a preset bit of the HS-SCCH is the same as a pre-defined bit value..

FIG. 7 is a block diagram of an embodiment of a base station according to the present invention.

The base station includes: an obtaining unit 710 and a sending unit 720.

The obtaining unit 710 is configured to obtain configuration signaling, where the configuration signaling includes a code channel number of a downlink control channel that UE needs to monitor.

The sending unit 720 is configured to send, on at least one code channel of the downlink control channel according to the configuration signaling obtained by the obtaining unit 710, a channel that bears uplink grant information of the UE, so that the UE monitors, on the at least one code channel of the downlink control channel, the channel that bears the uplink grant information.

In this embodiment, the downlink control channel may be an HS-SCCH; and the channel that bears the uplink grant information may include: a channel whose channel format is the same as that of an enhanced dedicated channel-absolute grant channel E-AGCH, or a channel whose channel format is the same as that of an HS-SCCH.

In an optional implementation manner:
when a channel format of the channel that bears the uplink grant information of the UE is the same as that of an E-AGCH, the sending unit 720 may include at least one of the following subunits (not shown in FIG. 7):
   a first sending subunit, configured to send, according to code channel numbers, of all HS-SCCHs, included in the configuration signaling, on all code sub-channels of code channels corresponding to the code channel numbers of all the HS-SCCHs, the channel that bears the uplink grant information of the UE;
   a second sending subunit, configured to send, according to a code channel number, of at least one HS-SCCH, in the configuration signaling indicated in notification signaling sent to the UE, on at least one code sub-channel of an HS-SCCH code channel corresponding to the code channel number of the at least one HS-SCCH, the channel that bears the uplink grant information of the UE; and
   a third sending subunit, configured to send, according to a code channel number, of at least one HS-SCCH, in the configuration signaling agreed upon in advance by the base station and the UE, on at least one code sub-channel of an HS-SCCH code channel corresponding to the code channel number of the at least one HS-SCCH, the channel that bears the uplink grant information of the UE.

In another optional implementation manner:
when a channel format of the channel that bears the uplink grant information is the same as that of an E-AGCH, the sending unit 720 may include (not shown in FIG. 7):
   a code channel number determining subunit, configured to determine, according to a time identifier or a UE identifier of the UE, from code channel numbers, of HS-SCCHs, included in the configuration signaling, a code channel number of at least one HS-SCCH that the UE needs to monitor in each subframe, where the time identifier includes a frame number, and/or a subframe number; and
   a fourth sending subunit, configured to send, on at least one code sub-channel of an HS-SCCH code channel corresponding to the code channel number, of the at least one HS-SCCH, determined by the code channel number determining subunit, the channel that bears the uplink grant information of the UE.

In another optional implementation manner:
when a channel format of the channel that bears the uplink grant information is the same as that of an HS-SCCH, the sending unit 720 may include (not shown in FIG. 7):
   a channel generating subunit, configured to generate an HS-SCCH used to bear the uplink grant information of the UE, where the HS-SCCH meets an uplink grant information bearing condition; and
   a fifth sending subunit, configured to send, according to the configuration signaling on an HS-SCCH code channel, the HS-SCCH that is generated by the channel generating subunit and that is used to bear the uplink grant information of the UE.

That the HS-SCCH meets an uplink grant information bearing condition may include:
the HS-SCCH includes a pre-configured radio network temporary identifier RNTI; or,
a code channel number of an HS-SCCH code channel of the HS-SCCH is a pre-configured code channel number; or,
a bit value of a preset bit of the HS-SCCH is the same as a pre-defined bit value.

FIG. 8 is a block diagram of another embodiment of a base station according to the present invention.

The base station includes: a transceiver 810 and a processor 820.

The transceiver 810 is configured to obtain configuration signaling, where the configuration signaling includes a code channel number of a downlink control channel that UE needs to monitor.

The processor 820 is configured to send, on at least one code channel of the downlink control channel according to the configuration signaling by using the transceiver, a channel that bears uplink grant information of the UE, so that the UE monitors, on the at least one code channel of the downlink control channel, the channel that bears the uplink grant information.

In this embodiment, the downlink control channel may be an HS-SCCH; and the channel that bears the uplink grant information may include: a channel whose channel format is the same as that of an enhanced dedicated channel-absolute grant channel E-AGCH, or a channel whose channel format is the same as that of an HS-SCCH.

In an optional implementation manner:
the processor 820 may be specifically configured to: when a channel format of the channel that bears the uplink grant information is the same as that of an E-AGCH, send, in at least one of the following manners on the at least one code channel of the downlink control channel according to the configuration signaling by using the transceiver, the channel that bears the uplink grant information of the UE:
   sending, according to code channel numbers, of all HS-SCCHs, included in the configuration signaling, on all code sub-channels of code channels corresponding to the code channel numbers of all the HS-SCCHs by using the transceiver, the channel that bears the uplink grant information of the UE;
   sending, by the base station according to a code channel number, of at least one HS-SCCH, in the configuration signaling indicated in notification signaling sent to the UE, on at least one code sub-channel of an HS-SCCH code channel corresponding to the code channel number of the at least one HS-SCCH by using the transceiver, the channel that bears the uplink grant information of the UE; and
   sending, by the base station according to a code channel number, of at least one HS-SCCH, in the configuration signaling agreed upon in advance by the base station and the UE, on at least one code sub-channel of an HS-SCCH code channel corresponding to the code channel number of the at least one HS-SCCH by using the transceiver, the channel that bears the uplink grant information of the UE.

In another optional implementation manner:
the processor 820 may be specifically configured to: when a channel format of the channel that bears the uplink grant information is the same as that of an E-AGCH, determine, according to a time identifier or a UE identifier of the UE, from code channel numbers, of HS-SCCHs, included in the configuration signaling, a code channel number of at least one HS-SCCH that the UE needs to monitor in each subframe, and send, on at least one code sub-channel of an HS-SCCH code channel corresponding to the determined code channel number of the at least one HS-SCCH by using the transceiver, the channel that bears the uplink grant information of the UE, where the time identifier includes a frame number, and/or a subframe number.

In another optional implementation manner:
the processor 820 may be specifically configured to: when a channel format of the channel that bears the uplink grant information is the same as that of an HS-SCCH, generate an HS-SCCH used to bear the uplink grant information of the UE, and send, according to the configuration signaling on an HS-SCCH code channel by using the transceiver, the HS-SCCH used to bear the uplink grant information of the UE, where the HS-SCCH meets an uplink grant information bearing condition.

That the HS-SCCH meets an uplink grant information bearing condition may include:
the HS-SCCH includes a pre-configured radio network temporary identifier RNTI; or,
a code channel number of an HS-SCCH code channel of the HS-SCCH is a pre-configured code channel number; or,
a bit value of a preset bit of the HS-SCCH is the same as a pre-defined bit value.

It can be seen from the foregoing embodiments that, UE obtains configuration signaling that includes a code channel number of a downlink control channel, and monitors, on at least one code channel of the downlink control channel according to the configuration signaling, a channel that bears uplink grant information. During implementation of HSUPA by applying the embodiments of the present invention, code channel resources of a downlink control channel that are supported by the UE are more than code channel resources of an uplink control channel; therefore, when a channel that bears uplink grant information is sent by using a code channel resource of the downlink control channel, flexibility of scheduling the UE by a system can be increased, and overheads of downlink code channel resources can also be reduced.

A person skilled in the art may clearly understand that, the technologies in the embodiments of the present invention may be implemented by software in addition to a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

The foregoing descriptions are implementation manners of the present invention, but are not intended to limit the protection scope of the present invention. Any modification, equivalent replacement, and improvement made without departing from the principle of the present invention shall fall within the protection scope of the present invention.

## Claims

1. A method for acquiring uplink grant information, wherein the method comprises:
obtaining, by user equipment UE, configuration signaling, wherein the configuration signaling comprises a code channel number of a downlink control channel; and
monitoring, by the UE on at least one code channel of the downlink control channel according to the configuration signaling, a channel that bears uplink grant information.

2. The method according to claim 1, wherein the downlink control channel is a high speed shared control channel HS-SCCH; and
the channel that bears the uplink grant information comprises: a channel whose channel format is the same as that of an enhanced dedicated channel-absolute grant channel E-AGCH, or a channel whose channel format is the same as that of an HS-SCCH.

3. The method according to claim 2, wherein when a channel format of the channel that bears the uplink grant information is the same as that of an E-AGCH, the monitoring, by the UE on at least one code channel of the downlink control channel according to the configuration signaling, a channel that bears uplink grant information comprises:
monitoring, by the UE according to code channel numbers, of all HS-SCCHs, comprised in the configuration signaling, on all code sub-channels of code channels corresponding to the code channel numbers of all the HS-SCCHs, the channel that bears the uplink grant information; or,
monitoring, by the UE according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information; or,
monitoring, by the UE according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

4. The method according to claim 2, wherein when a channel format of the channel that bears the uplink grant information is the same as that of an E-AGCH, the monitoring, by the UE on at least one code channel of the downlink control channel according to the configuration signaling, a channel that bears uplink grant information comprises:
determining, by the UE according to a time identifier or a UE identifier, from code channel numbers, of HS-SCCHs, comprised in the configuration signaling, a code channel number of at least one HS-SCCH that needs to be monitored in each subframe, wherein the time identifier comprises a frame number, and/or a subframe number; and
monitoring, by the UE on at least one code sub-channel of an HS-SCCH code channel corresponding to the determined code channel number of the at least one HS-SCCH, the channel that bears the uplink grant information.

5. The method according to claim 2, wherein when a channel format of the channel that bears the uplink grant information is the same as that of an HS-SCCH, the monitoring, by the UE on at least one code channel of the downlink control channel according to the configuration signaling, a channel that bears uplink grant information comprises:
detecting, by the UE, when an HS-SCCH is obtained by means of monitoring on an HS-SCCH code channel according to the configuration signaling, whether the HS-SCCH meets an uplink grant information bearing condition; and
when a detection result is that the HS-SCCH meets the uplink grant information bearing condition, determining that the HS-SCCH obtained by means of monitoring is the channel that bears the uplink grant information.

6. The method according to claim 5, wherein that the detection result is that the HS-SCCH meets the uplink grant information bearing condition comprises:
the detection result is that the HS-SCCH comprises a radio network temporary identifier RNTI pre-configured by a network device; or,
the detection result is that a code channel number of the HS-SCCH code channel of the HS-SCCH obtained by means of monitoring is a pre-configured code channel number; or,
the detection result is that a bit value of a preset bit of the HS-SCCH is the same as a pre-defined bit value.

7. User equipment UE, wherein the UE comprises:
an obtaining unit, configured to obtain configuration signaling, wherein the configuration signaling comprises a code channel number of a downlink control channel; and
a monitoring unit, configured to monitor, on at least one code channel of the downlink control channel according to the configuration signaling obtained by the obtaining unit, a channel that bears uplink grant information.

8. The UE according to claim 7, wherein the downlink control channel is an HS-SCCH; and
the channel that bears the uplink grant information comprises: a channel whose channel format is the same as that of an enhanced dedicated channel-absolute grant channel E-AGCH, or a channel whose channel format is the same as that of an HS-SCCH.

9. The UE according to claim 8, wherein when a channel format of the channel that bears the uplink grant information is the same as that of an E-AGCH, the monitoring unit comprises at least one of the following subunits:
a first monitoring subunit, configured to monitor, according to code channel numbers, of all HS-SCCHs, comprised in the configuration signaling, on all code sub-channels of code channels corresponding to the code channel numbers of all the HS-SCCHs, the channel that bears the uplink grant information;
a second monitoring subunit, configured to monitor, according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information; and
a third monitoring subunit, configured to monitor, according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

10. The UE according to claim 8, wherein when a channel format of the channel that bears the uplink grant information is the same as that of an E-AGCH, the monitoring unit comprises:
a code channel number determining subunit, configured to determine, according to a time identifier or a UE identifier, from code channel numbers, of HS-SCCHs, comprised in the configuration signaling, a code channel number of at least one HS-SCCH that needs to be monitored in each subframe, wherein the time identifier comprises a frame number, and/or a subframe number; and
a fourth monitoring subunit, configured to monitor, on at least one code sub-channel of an HS-SCCH code channel corresponding to the code channel number, of the at least one HS-SCCH, determined by the code channel number determining subunit, the channel that bears the uplink grant information.

11. The UE according to claim 2, wherein when a channel format of the channel that bears the uplink grant information is the same as that of an HS-SCCH, the monitoring unit comprises:
a fifth monitoring subunit, configured to monitor an HS-SCCH on an HS-SCCH code channel according to the configuration signaling;
a condition detection subunit, configured to detect whether the HS-SCCH obtained by means of monitoring by the fifth monitoring subunit meets an uplink grant information bearing condition; and
a channel determining subunit, configured to: when a detection result of the condition detection subunit is that the HS-SCCH meets the uplink grant information bearing condition, determine that the HS-SCCH obtained by means of monitoring is the channel that bears the uplink grant information.

12. The UE according to claim 11, wherein that the detection result is that the HS-SCCH meets the uplink grant information bearing condition comprises:
the detection result is that the HS-SCCH comprises a radio network temporary identifier RNTI pre-configured by a network device; or,
the detection result is that a code channel number of the HS-SCCH code channel of the HS-SCCH obtained by means of monitoring is a pre-configured code channel number; or,
the detection result is that a bit value of a preset bit of the HS-SCCH is the same as a pre-defined bit value.

13. User equipment UE, wherein the UE comprises a radio transceiver and a processor, wherein
the radio transceiver is configured to obtain configuration signaling, wherein the configuration signaling comprises a code channel number of a downlink control channel; and
the processor is configured to monitor, on at least one code channel of the downlink control channel according to the configuration signaling, a channel that bears uplink grant information.

14. The UE according to claim 13, wherein the downlink control channel is a high speed shared control channel HS-SCCH; and
the channel that bears the uplink grant information comprises: a channel whose channel format is the same as that of an enhanced dedicated channel-absolute grant channel E-AGCH, or a channel whose channel format is the same as that of an HS-SCCH.

15. The UE according to claim 14, wherein the processor is specifically configured to: when a channel format of the channel that bears the uplink grant information is the same as that of an E-AGCH, monitor, in at least one of the following manners on the at least one code channel of the downlink control channel according to the configuration signaling, the channel that bears the uplink grant information:
monitoring, according to code channel numbers, of all HS-SCCHs, comprised in the configuration signaling, on all code sub-channels of code channels corresponding to the code channel numbers of all the HS-SCCHs, the channel that bears the uplink grant information;
monitoring, according to a code channel number, of at least one HS-SCCH, in the configuration signaling indicated in notification signaling sent by a network device, on at least one code sub-channel of an HS-SCCH code channel corresponding to the code channel number of the at least one HS-SCCH, the channel that bears the uplink grant information; and
monitoring, according to a code channel number, of at least one HS-SCCH, in the configuration signaling agreed upon in advance by the UE and a network device, on at least one code sub-channel of an HS-SCCH code channel corresponding to the code channel number of the at least one HS-SCCH, the channel that bears the uplink grant information.

16. The UE according to claim 14, wherein the processor is specifically configured to: when a channel format of the channel that bears the uplink grant information is the same as that of an E-AGCH, determine, according to a time identifier or a UE identifier, from code channel numbers, of HS-SCCHs, comprised in the configuration signaling, a code channel number of at least one HS-SCCH that needs to be monitored in each subframe, and monitor, on at least one code sub-channel of an HS-SCCH code channel corresponding to the determined code channel number of the at least one HS-SCCH, the channel that bears the uplink grant information, wherein the time identifier comprises a frame number, and/or a subframe number.

17. The UE according to claim 14, wherein the processor is specifically configured to: when a channel format of the channel that bears the uplink grant information is the same as that of an HS-SCCH, detect, when an HS-SCCH is obtained by means of monitoring on an HS-SCCH code channel according to the configuration signaling, whether the HS-SCCH meets an uplink grant information bearing condition; and when a detection result is that the HS-SCCH meets the uplink grant information bearing condition, determine that the HS-SCCH obtained by means of monitoring is the channel that bears the uplink grant information.

18. The UE according to claim 17, wherein that the detection result is that the HS-SCCH meets the uplink grant information bearing condition comprises:
the detection result is that the HS-SCCH comprises a radio network temporary identifier RNTI pre-configured by a network device; or,
the detection result is that a code channel number of the HS-SCCH code channel of the HS-SCCH obtained by means of monitoring is a pre-configured code channel number; or,
the detection result is that a bit value of a preset bit of the HS-SCCH is the same as a pre-defined bit value.

19. A method for acquiring uplink grant information, wherein the method comprises:
obtaining, by a base station, configuration signaling, wherein the configuration signaling comprises a code channel number of a downlink control channel that UE needs to monitor; and
sending, by the base station on at least one code channel of the downlink control channel according to the configuration signaling, a channel that bears uplink grant information of the UE, so that the UE monitors, on the at least one code channel of the downlink control channel, the channel that bears the uplink grant information.

20. The method according to claim 19, wherein the downlink control channel is a high speed shared control channel HS-SCCH; and
the channel that bears the uplink grant information comprises: a channel whose channel format is the same as that of an enhanced dedicated channel-absolute grant channel E-AGCH, or a channel whose channel format is the same as that of an HS-SCCH.

21. The method according to claim 20, wherein when a channel format of the channel that bears the uplink grant information of the UE is the same as that of an E-AGCH, the sending, by the base station on at least one code channel of the downlink control channel according to the configuration signaling, a channel that bears uplink grant information of the UE comprises:
sending, by the base station according to code channel numbers, of all HS-SCCHs, comprised in the configuration signaling, on all code sub-channels of code channels corresponding to the code channel numbers of all the HS-SCCHs, the channel that bears the uplink grant information of the UE; or,
sending, by the base station according to a code channel number, of at least one HS-SCCH, in the configuration signaling indicated in notification signaling sent to the UE, on at least one code sub-channel of an HS-SCCH code channel corresponding to the code channel number of the at least one HS-SCCH, the channel that bears the uplink grant information of the UE; or,
sending, by the base station according to a code channel number, of at least one HS-SCCH, in the configuration signaling agreed upon in advance by the base station and the UE, on at least one code sub-channel of an HS-SCCH code channel corresponding to the code channel number of the at least one HS-SCCH, the channel that bears the uplink grant information of the UE.

22. The method according to claim 20, wherein when a channel format of the channel that bears the uplink grant information is the same as that of an E-AGCH, the sending, by the base station on at least one code channel of the downlink control channel according to the configuration signaling, a channel that bears uplink grant information of the UE comprises:
determining, by the base station according to a time identifier or a UE identifier of the UE, from code channel numbers, of HS-SCCHs, comprised in the configuration signaling, a code channel number of at least one HS-SCCH that the UE needs to monitor in each subframe, wherein the time identifier comprises a frame number, and/or a subframe number; and
sending, by the base station, on at least one code sub-channel of an HS-SCCH code channel corresponding to the determined code channel number of the at least one HS-SCCH, the channel that bears the uplink grant information of the UE.

23. The method according to claim 20, wherein when a channel format of the channel that bears the uplink grant information is the same as that of an HS-SCCH, the sending, by the base station on at least one code channel of the downlink control channel according to the configuration signaling, a channel that bears uplink grant information of the UE comprises:
generating, by the base station, an HS-SCCH used to bear the uplink grant information of the UE, wherein the HS-SCCH meets an uplink grant information bearing condition; and
sending, by the base station according to the configuration signaling on an HS-SCCH code channel, the HS-SCCH used to bear the uplink grant information of the UE.

24. The method according to claim 23, wherein that the HS-SCCH meets an uplink grant information bearing condition comprises:
the HS-SCCH comprises a pre-configured radio network temporary identifier RNTI; or,
a code channel number of an HS-SCCH code channel of the HS-SCCH is a pre-configured code channel number; or,
a bit value of a preset bit of the HS-SCCH is the same as a pre-defined bit value.

25. A base station, wherein the base station comprises:
an obtaining unit, configured to obtain configuration signaling, wherein the configuration signaling comprises a code channel number of a downlink control channel that UE needs to monitor; and
a sending unit, configured to send, on at least one code channel of the downlink control channel according to the configuration signaling obtained by the obtaining unit, a channel that bears uplink grant information of the UE, so that the UE monitors, on the at least one code channel of the downlink control channel, the channel that bears the uplink grant information.

26. The base station according to claim 25, wherein the downlink control channel is a high speed shared control channel HS-SCCH; and
the channel that bears the uplink grant information comprises: a channel whose channel format is the same as that of an enhanced dedicated channel-absolute grant channel E-AGCH, or a channel whose channel format is the same as that of an HS-SCCH.

27. The base station according to claim 26, wherein when a channel format of the channel that bears the uplink grant information of the UE is the same as that of an E-AGCH, the sending unit comprises at least one of the following subunits:
a first sending subunit, configured to send, according to code channel numbers, of all HS-SCCHs, comprised in the configuration signaling, on all code sub-channels of code channels corresponding to the code channel numbers of all the HS-SCCHs, the channel that bears the uplink grant information of the UE;
a second sending subunit, configured to send, according to a code channel number, of at least one HS-SCCH, in the configuration signaling indicated in notification signaling sent to the UE, on at least one code sub-channel of an HS-SCCH code channel corresponding to the code channel number of the at least one HS-SCCH, the channel that bears the uplink grant information of the UE; and
a third sending subunit, configured to send, according to a code channel number, of at least one HS-SCCH, in the configuration signaling agreed upon in advance by the base station and the UE, on at least one code sub-channel of an HS-SCCH code channel corresponding to the code channel number of the at least one HS-SCCH, the channel that bears the uplink grant information of the UE.

28. The base station according to claim 26, wherein when a channel format of the channel that bears the uplink grant information is the same as that of an E-AGCH, the sending unit comprises:
a code channel number determining subunit, configured to determine, according to a time identifier or a UE identifier of the UE, from code channel numbers, of HS-SCCHs, comprised in the configuration signaling, a code channel number of at least one HS-SCCH that the UE needs to monitor in each subframe, wherein the time identifier comprises a frame number, and/or a subframe number; and
a fourth sending subunit, configured to send, on at least one code sub-channel of an HS-SCCH code channel corresponding to the code channel number, of the at least one HS-SCCH, determined by the code channel number determining subunit, the channel that bears the uplink grant information of the UE.

29. The base station according to claim 26, wherein when a channel format of the channel that bears the uplink grant information is the same as that of an HS-SCCH, the sending unit comprises:
a channel generating subunit, configured to generate an HS-SCCH used to bear the uplink grant information of the UE, wherein the HS-SCCH meets an uplink grant information bearing condition; and
a fifth sending subunit, configured to send, according to the configuration signaling on an HS-SCCH code channel, the HS-SCCH that is generated by the channel generating subunit and that is used to bear the uplink grant information of the UE.

30. The base station according to claim 29, wherein that the HS-SCCH meets an uplink grant information bearing condition comprises:
the HS-SCCH comprises a pre-configured radio network temporary identifier RNTI; or,
a code channel number of an HS-SCCH code channel of the HS-SCCH is a pre-configured code channel number; or,
a bit value of a preset bit of the HS-SCCH is the same as a pre-defined bit value.

31. Abase station, wherein the base station comprises: a transceiver and a processor, wherein
the transceiver is configured to obtain configuration signaling, wherein the configuration signaling comprises a code channel number of a downlink control channel that UE needs to monitor; and
the processor is configured to send, on at least one code channel of the downlink control channel according to the configuration signaling by using the transceiver, a channel that bears uplink grant information of the UE, so that the UE monitors, on the at least one code channel of the downlink control channel, the channel that bears the uplink grant information.

32. The base station according to claim 31, wherein the downlink control channel is a high speed shared control channel HS-SCCH; and
the channel that bears the uplink grant information comprises: a channel whose channel format is the same as that of an enhanced dedicated channel-absolute grant channel E-AGCH, or a channel whose channel format is the same as that of an HS-SCCH.

33. The base station according to claim 32, wherein the processor is specifically configured to:
when a channel format of the channel that bears the uplink grant information is the same as that of an E-AGCH, send, in at least one of the following manners on the at least one code channel of the downlink control channel according to the configuration signaling by using the transceiver, the channel that bears the uplink grant information of the UE:
sending, according to code channel numbers, of all HS-SCCHs, comprised in the configuration signaling, on all code sub-channels of code channels corresponding to the code channel numbers of all the HS-SCCHs by using the transceiver, the channel that bears the uplink grant information of the UE;
sending, by the base station according to a code channel number, of at least one HS-SCCH, in the configuration signaling indicated in notification signaling sent to the UE, on at least one code sub-channel of an HS-SCCH code channel corresponding to the code channel number of the at least one HS-SCCH by using the transceiver, the channel that bears the uplink grant information of the UE; and
sending, by the base station according to a code channel number, of at least one HS-SCCH, in the configuration signaling agreed upon in advance by the base station and the UE, on at least one code sub-channel of an HS-SCCH code channel corresponding to the code channel number of the at least one HS-SCCH by using the transceiver, the channel that bears the uplink grant information of the UE.

34. The base station according to claim 32, wherein the processor is specifically configured to:
when a channel format of the channel that bears the uplink grant information is the same as that of an E-AGCH, determine, according to a time identifier or a UE identifier of the UE, from code channel numbers, of HS-SCCHs, comprised in the configuration signaling, a code channel number of at least one HS-SCCH that the UE needs to monitor in each subframe, and send, on at least one code sub-channel of an HS-SCCH code channel corresponding to the determined code channel number of the at least one HS-SCCH by using the transceiver, the channel that bears the uplink grant information of the UE, wherein the time identifier comprises a frame number, and/or a subframe number.

35. The base station according to claim 32, wherein the processor is specifically configured to:
when a channel format of the channel that bears the uplink grant information is the same as that of an HS-SCCH, generate an HS-SCCH used to bear the uplink grant information of the UE, and send, according to the configuration signaling on an HS-SCCH code channel by using the transceiver, the HS-SCCH used to bear the uplink grant information of the UE, wherein the HS-SCCH meets an uplink grant information bearing condition.

36. The base station according to claim 35, wherein that the HS-SCCH meets an uplink grant information bearing condition comprises:
the HS-SCCH comprises a pre-configured radio network temporary identifier RNTI; or,
a code channel number of an HS-SCCH code channel of the HS-SCCH is a pre-configured code channel number; or,
a bit value of a preset bit of the HS-SCCH is the same as a pre-defined bit value.
